# EUROPÄISCHE PATENTSCHRIFT

(11) **EP 1 805 189 B1**
(45) Veröffentlichungstag und Bekanntmachung des Hinweises auf die Patenterteilung: **16.07.2008**
(21) Anmeldenummer: 05794420.9
(22) Anmeldetag: 13.10.2005
(51) Int. Cl.: C07F 7/10

(54) **VERFAHREN ZUR HERSTELLUNG VON ORGANOSILAZANEN**
METHOD FOR PRODUCING ORGANOSILAZANES
PROCEDE POUR PRODUIRE DES ORGANOSILAZANES

(30) Priorität: 26.10.2004 DE 102004051899
(43) Veröffentlichungstag der Anmeldung: 11.07.2007
(73) Patentinhaber: Wacker Chemie AG, 81737 München (DE)
(72) Erfinder: BAUER, Andreas, 84359 Simbach (DE)
(74) Vertreter: Potten, Holger
(86) Internationale Anmeldenummer: PCT/EP2005/011036
(87) Internationale Veröffentlichungsnummer: WO 2006/045444

(56) Entgegenhaltungen:
- EP-A- 0 921 127
- DE-A1- 19 938 475

## Beschreibung

Die Erfindung betrifft ein Verfahren zur Herstellung von Organosilazan und Ammoniumhalogenid.

DE 26 45 703 B2 beschreibt ein Verfahren zur Herstellung von Hexamethyldisilazan durch Umsetzung von Trimethylchlorsilan mit gasförmigem Ammoniak in Gegenwart von Hexamethyldisilazan als Lösungsmittel. Das bei der Reaktion gebildete Ammoniumchlorid wird durch Auswaschen mit Wasser vom Hexamethyldisilazan abgetrennt. Das Hexamethyldisilazan wird anschließend mit Natriumsulfat getrocknet und das Natriumsulfat abfiltriert. Der Nachteil dieser Vorgehensweise bei der Salzabtrennung besteht darin, dass beim Auswaschen mit Wasser eine teilweise Hydrolyse des Hexamethyldisilazans erfolgt und somit Ausbeuteverluste auftreten, das Silazan nachbehandelt und filtriert werden muss und das Ammoniumchlorid als wässrige Lösung in einer nicht wiederverwertbaren Form anfällt.

In DE 26 45 792 C2 wird das Ammoniumchlorid vom Hexamethyldisilazan durch Destillation bei einer Sumpftemperatur unter 75°C und verringertem Druck abgetrennt. Durch die gewählten Destillationsbedingungen wird vermieden, dass größere Mengen Ammoniumchlorid beim Abdestillieren des Hexamethyldisilazans sublimieren und dabei die Leitungswege verstopfen. Das nach der Destillation im Reaktor verbliebene Ammoniumchlorid, welches noch Reste an Hexamethyldisilazan enthält, wird durch Zugabe von verdünnter Salzsäure aufgelöst. Das restliche Hexamethyldisilazan reagiert dabei zu Hexamethyldisiloxan und wird als leichtere Phase vom wässrigen Ammoniumchlorid abgetrennt. Dieses Verfahren der Salzabtrennung hat den Nachteil, dass das Hexamethyldisilazan destillativ vom Ammoniumchlorid und damit sehr aufwendig entfernt werden muss. Des weiteren ist es für den Fachmann sofort ersichtlich, daß diese Art der Abtrennung im produktionstechnischen Maßstab kaum realisierbar ist, da im Reaktor als Rückstand festes, nicht mehr rührfähiges Ammoniumchlorid anfällt, welches folglich noch Hexamethyldisilazan enthält und somit Ausbeuteverluste an Hexamethyldisilazan auftreten. Schließlich fällt auch hier Ammoniumchlorid als wässrige Lösung an.

Eine weitere Möglichkeit der Salzabtrennung besteht darin, dass man das Ammoniumchlorid mittels Filtration oder Zentrifugalabtrennung aus der Reaktionsmischung entfernt. Das noch Hexamethyldisilazan haltige Ammoniumchlorid wird dann in verdünnter Salzsäure gelöst, wobei wiederum Hexamethyldisiloxan entsteht und Ammoniumchlorid als wässrige Lösung anfällt. Auch bei dieser Vorgehensweise treten Ausbeuteverluste an Hexamethyldisilazan auf, da bei der Filtration oder Zentrifugalabtrennung erhebliche Anteile an Hexamethyldisilazan im Ammoniumchlorid verbleiben.

Versuche, die Ausbeute an Hexamethyldisilazan dadurch zu erhöhen, dass man aus dem Ammoniumchlorid, wie es bei der Filtration bzw. Zentrifugalabtrennung anfällt, das enthaltene Hexamethyldisilazan nachträglich etwa durch Trocknung entfernt, scheitern im produktionstechnischem Maßstab, da das Ammoniumchlorid während des Trocknungsprozesses mit herkömmlichen Trocknungseinrichtungen zu größeren, sehr harten Agglomeraten sintert, welche technisch nicht mehr gehandhabt werden können und des weiteren eine vollständige Entfernung des Hexamethyldisilazans unmöglich machen.

EP 0 921 127 A1 beschreibt ein Verfahren zur Herstellung von Organosilazanen und Ammoniumchlorid, wobei ein Organochlorsilan und Ammoniak in Gegenwart von Organosilazan als Lösungsmittel umgesetzt wird, wobei aus der entstandenen Mischung enthaltend Organosilazan und Ammoniumchlorid, Ammoniumchlorid abgetrennt wird, indem vor der Abtrennung zur Mischung, oder nach der Abtrennung des Ammoniumchlorids, ein Antiblockmittel hinzugefügt wird. Der Nachteil bei diesem Verfahren liegt in der aufwendigen Abtrennung des festen Ammoniumchlorids von Organosilazan. Abtrennverfahren sind thermische Verfahren oder die Kombination von mechanischen Verfahren und thermischen Verfahren, wobei die Kombination von mechanischen Verfahren und thermischen Verfahren bevorzugt ist. Bei der Kombination von mechanischen und thermischen Verfahren wird das mechanische Verfahren vor dem thermischen Verfahren durchgeführt.

Es bestand die Aufgabe, die Nachteile des Standes der Technik zu überwinden.

Gegenstand der Erfindung ist ein kontinuierliches Verfahren zur Herstellung von Organosilazanen, bei dem kontinuierliche Ströme von Ammoniak und Organohalogensilan mit einem molaren Verhältnis von mindestens 7:1 in einem Druckreaktor bei einer Temperatur >160°C und einem Druck >110 bar zur Reaktion gebracht werden, die Endreaktionsmischung bei einer Temperatur >80 °C, einem Druck >40 bar und einem Ammoniumhalogenid-Gehalt von >1 Gew.-% aus zwei Phasen
A welche mindestens 75 Gew.-% der Gesamtmenge an Ammoniumhalogenid enthält und
B welche mindestens 80 Gew.-% der Gesamtmenge an Organosilazan enthält,
besteht, die aufgetrennt werden.

Mit dem erfindungsgemäßen Verfahren steht nun ein einfaches, wirtschaftliches und umweltbewußtes kontinuierliches Verfahren zur Herstellung von Organosilazanen zur Verfügung. Es vermeidet eine aufwendige Fest-Flüssig-Trennung der Reaktionsprodukte. Ein Vorteil des Verfahrens ist, dass keine Ausbeuteverluste an Organosilazan auftreten und das Ammoniumhalogenid in fester, reiner und handhabbarer, d. h. rieselfähiger und blockstabiler Form gewonnen wird und den bekannten Einsatzzwecken von denen einige im Folgenden genannt sind, zugänglich ist. Ammoniumchlorid z. B. ist ein wertvoller Rohstoff u. a. für den Düngemittelsektor, für den Sprengstoffbereich und zur Herstellung von Zink/Ammoniumchlorid-Schmelzen. Des weiteren wird Ammoniumchlorid als Stickstofflieferant in kommunalen biologischen Kläranlagen eingesetzt.

Das erfindungsgemäße Verfahren beruht auf der überraschenden Entdeckung, dass sich aus der Endreaktionsmischung (das Reaktionsgemisch nach Ablauf der Reaktion) enthaltend Organosilazan, Ammoniumhalogenid und Ammoniak bei einer Temperatur >80°C, einem Druck >40 bar und einem Ammoniumhalogenid-Gehalt von >1 Gew.-% eine flüssige Phase A abscheidet, welche aus mindestens 75 Gew.-% der Gesamtmenge an gebildetem Ammoniumhalogenid und höchstens 20 Gew.-% der Gesamtmenge an gebildetem Organosilazan und Ammoniak besteht. Die Ammoniak-Phase B enthält dementsprechend höchstens 25 Gew.-% der Gesamtmenge an Ammoniumhalogenid und mindestens 80 Gew.-% der Gesamtmenge an Organosilazan. Die Ammoniak-Phase B weist eine deutlich niedrigere Dichte als die Ammoniumhalogenid-Phase A auf.

Das Verfahren erlaubt eine selektive und kontinuierliche Abscheidung der einzelnen Reaktionsprodukte aus der Endreaktionsmischung ohne Zusatz von Fremdstoffen und stellt gleichzeitig sicher, dass nur ein kleiner Teil des Prozessammoniaks vollständig verdampft und wieder kondensiert werden muss. Dadurch werden hohe Produktausbeuten bzw. -reinheiten bei niedrigen Herstellkosten gewährleistet.

Unter Ausnutzung des Dichteunterschieds können die beteiligten Phasen A und B mit gängigen Methoden der Flüssig-Flüssig-Trennung voneinander separiert werden. Vorzugsweise beträgt der Druck bei der Trennung der Endreaktionsmischung mindestens 80 und höchstens 400 bar. Besonders bevorzugt findet die Separation der Endreaktionsmischung oberhalb des kritischen Punkts des Ammoniaks (132,4°C, 112,8 bar) statt, da hier die Ammoniumhalogenid-Phase A mindestens 85 Gew.-% der Gesamtmenge an gebildetem Ammoniumhalogenid und höchstens 10 Gew.-% der Gesamtmenge an Organosilazan enthält. Gegebenfalls kann die Ammoniumhalogenid-Phase A während der Separation mit reinem Ammoniak extrahiert werden, um einen Restgehalt an Organosilazan zu entfernen.

Die noch bis zu 20 Gew.-% der Gesamtmenge an Organosilazan enthaltende Phase A wird vorzugsweise kontinuierlich unter Entspannung aus dem Prozess ausgeschleust, wobei vorzugsweise der enthaltene Ammoniak verdampft und recycliert wird. Das in kristalliner Form anfallende Ammoniumhalogenid kann gegebenenfalls noch durch Waschen mit einem organischen Lösungsmittel von eventuell anhaftendem Organosilazan befreit werden.

Die von der Ammoniumhalogenid-Phase A befreite Ammoniak-Phase B, beladen mit der Hauptmenge an Organosilazan und wenig Ammoniumhalogenid, wird vorzugsweise auf einen Druck von mindestens 15 bar bei einer Temperatur von mindestens 50°C entspannt, wobei sich eine weitere fluide Phase C abscheidet. Die gebildete flüssige Phase C enthält viel Organosilazan, wenig Ammoniumhalogenid und Ammoniak und kann aufgrund eines deutlichen Dichteunterschieds mit gängigen Methoden von der weniger dichten Ammoniakphase D separiert werden. Die separierte reine Ammoniakphase D wird vorzugsweise verdichtet und in den Prozess zurückgeführt.

Nach Ausschleusen der Organosilazan-Phase C unter Entspannung wird diese vorzugsweise kontinuierlich im Vakuum von Restammoniak befreit. Gegebenenfalls kann das Organosilazan durch einen Rektifikationschritt weiter aufgereinigt werden.

Vorzugsweise beträgt bei der Reaktion das molare Verhältnis von Ammoniak und Organohalogensilan mindestens 7:1. Vorzugsweise beträgt das molare Verhältnis von Ammoniak und Organohalogensilan höchstens 150:1.

Vorzugsweise werden die Ströme von Ammoniak und Organohalogensilan vor Eintritt in den Druckreaktor vorgeheizt. Vorzugsweise beträgt die Reaktionstemperatur mindestens 160°C und vorzugsweise höchstens 400°C, insbesondere höchstens 300°C.

Mit dem erfindungsgemäßen Verfahren wird vorzugsweise Hexamethyldisilazan oder 1,3-Divinyl-tetramethyldisilazan hergestellt.

Bei dem Organohalogensilan handelt es sich vorzugsweise um Trimethylchlorsilan oder Vinyldimethylchlorsilan oder deren Mischungen.

Bei dem Ammoniumhalogenid handelt es sich vorzugsweise um Ammoniumchlorid.

Das erfindungsgemäße Verfahren hat den Vorteil, dass es im Produktionsmaßstab einfach durchzuführen ist, eine hohe Ausbeute an Organosilazan ergibt und umweltbewußt ist, da das erhaltene Ammoniumhalogenid einer Wiederverwertung zugeführt werden kann.

Ein weiterer Vorteil besteht darin, dass das erhaltene Ammoniumhalogenid ohne Zusatz von Anti-Blockmitteln eine hohe Blockfestigkeit und Rieselfähigkeit aufweist und damit auch nach längerer Lagerung keine Schwierigkeiten bei der Handhabung, etwa beim Entleeren aus Gebinden, auftreten.

Infolge des niedrigen Gehaltes an noch vorhandenem Organosilazan stellt das nach dem erfindungsgemäßen Verfahren hergestellte Ammoniumhalogenid nach den gängigen Vorschriften ein Nichtgefahrgut dar und ist somit auf einfachere Weise einer universellen Wiederverwertung zuführbar.

Das nach den erfindungsgemäßen Verfahren hergestellte Ammoniumhalogenid weist hinsichtlich des Gehaltes an umweltrelevanten Verunreinigungen wie etwa den Schwermetallen Blei, Cadmium, Chrom, Nickel, Zink, Kupfer und Quecksilber eine Reinheit auf, die herkömmlichem Ammoniumhalogenid, wie es über den Chemikalienfachhandel vertrieben wird, vergleichbar ist.

Das folgende Beispiel dient der weiteren Erläuterung der Erfindung:

### Beispiel

In einem Druckreaktor (70 1 Volumen) aus korrosionsbeständigem Material (Hastelloy B3, allgemein geeignet sind Hastelloy-Stähle der B- und C-Reihe) werden auf je 175°C vorgeheizte Ströme von Ammoniak (31,3 kg/h) und Trimethylchlorsilan (8,0 kg/h) bei einem Druck von 230 bar miteinander zur Reaktion gebracht. Die mittlere Verweilzeit im Reaktionsteil beträgt 35 Min.

In einer nachgeschalteten ersten Separationsstufe wird bei einem Druck von 160 bar und einer Temperatur von 160°C aus dem zweiphasigen Reaktionsgemisch die schwere, untere Phase A abgetrennt und mit 3,0 kg/h reinem Ammoniak extrahiert. Die extrahierte Phase A wird anschließend unter Entspannung in eine Trocknungsvorrichtung transferiert, wobei sich die Phase in 3,9 kg/h festes Salz und gasförmigen Ammoniak, welcher recycliert wird, zersetzt. Die Reinheit des gewonnenen Ammoniumchlorids beträgt 99,9 Gew.-%.

Der die erste Separationsstufe verlassende Organosilazanhaltige Ammoniak-Strom B wird vor Eintritt in die zweite Separationsstufe auf 50 bar entspannt und auf 100°C temperiert, wobei sich erneut ein zweiphasiges Gemisch bildet. Die schwere, untere Organosilazan- und Ammoniak-enthaltende Phase C wird vom Ammoniak-Strom D unter Entspannung abgetrennt, wobei das Ammoniak gasförmig entweicht und recycliert wird. Das Ammoniak-haltige Organosilazan wird in einen Entgasungsbehälter im Vakuum von gelöstem Ammoniak befreit. Der erhaltene Produktstrom von 5,7 kg/h (96 % der Theorie) besteht aus Hexamethyldisilazan mit einer Reinheit von 99,0 Gew.-%. Der aus der zweiten Separationsstufe entweichende Ammoniak-Strom D wird verdichtet, mit frischem Ammoniak wieder auf die Ziel-Stöchiometrie eingestellt und in den Prozeß zurückgeführt.

Raum-Zeit-Ausbeute (Ausbeute Produkt in g pro h und Liter Reaktorvolumen): 76 g/lh

## Patentansprüche

1. Kontinuierliches Verfahren zur Herstellung von Organosilazanen, bei dem kontinuierliche Ströme von Ammoniak und Organohalogensilan mit einem molaren Verhältnis von mindestens 7:1 in einem Druckreaktor bei einer Temperatur >160°C und einem Druck >110 bar zur Reaktion gebracht werden, die Endreaktionsmischung bei einer Temperatur >80°C, einem Druck >40 bar
und einem Ammoniumhalogenid-Gehalt von > 1 Gew.-% aus zwei Phasen
A welche mindestens 75 Gew.-% der Gesamtmenge an Ammonium halogenid enthält und
B welche mindestens 80 Gew.-% der Gesamtmenge an Organosila zan enthält,
besteht, die aufgetrennt werden.

2. Verfahren nach Anspruch 1, **dadurch gekennzeichnet, dass** der Druck bei der Trennung der Endreaktionsmischung mindestens 80 und höchstens 400 bar beträgt.

3. Verfahren nach Anspruch 1 oder 2, **dadurch gekennzeichnet, dass** die Auftrennung der Endreaktionsmischung oberhalb des kritischen Punkts des Ammoniaks (132,4°C, 112,8 bar) stattfindet.

4. Verfahren nach Anspruch 1, 2 oder 3, **dadurch gekennzeichnet, dass** die Phase B auf einen Druck von mindestens 15 bar bei einer Temperatur von mindestens 50°C entspannt wird, und die sich bildenden Phasen
C, welche viel Organosilazan und wenig Ammoniumhalogenid enthält und
D, welche den überwiegenden Teil des Ammoniaks enthält, aufgetrennt werden.

5. Verfahren nach einem der Ansprüche 1 bis 4, **dadurch gekennzeichnet, dass** das molare Verhältnis von Ammoniak und Organohalogensilan mindestens 7:1 beträgt.

6. Verfahren nach Anspruch 1 bis 5, bei dem die Ströme von Ammoniak und Organohalogensilan vor Eintritt in den Druckreaktor vorgeheizt werden.

## Claims

1. Continuous method for preparing organosilazanes in which continuous streams of ammonia and organohalosilane with a molar ratio of at least 7:1 are reacted in a pressure reactor at a temperature of > 160°C and under a pressure of > 110 bar, the final reaction mixture consists, at a temperature of > 80°C, under a pressure of > 40 bar and with an ammonium halide content of > 1% by weight, of two phases
A which comprises at least 75% by weight of the total amount of ammonium halide and
B which comprises at least 80% by weight of the total amount of organosilazane,
which are separated.

2. Method according to Claim 1, **characterized in that** the pressure during the separation of the final reaction mixture is at least 80 and at most 400 bar.

3. Method according to Claim 1 or 2, **characterized in that** the separation of the final reaction mixture takes place above the critical point of ammonia (132.4°C, 112.8 bar).

4. Method according to Claim 1, 2 or 3, **characterized in that** phase B is decompressed to a pressure of at least 15 bar at a temperature of at least 50°C, and the formed phases
C, which comprises a large amount of organosilazane and a little ammonium halide, and
D, which comprises the predominant part of the ammonia,
are separated.

5. Method according to any of Claims 1 to 4,
**characterized in that** the molar ratio of ammonia and organohalosilane is at least 7:1.

6. Method according to Claim 1 to 5, in which the streams of ammonia and organohalosilane are preheated before entry into the pressure reactor.

## Revendications

1. Procédé continu en vue de la fabrication d'organosilazanes, lors duquel des courants continus d'ammoniac et d'organohalogénosilane, ayant un rapport molaire d'au moins 7:1, sont mis en réaction dans un réacteur sous pression à une température > 160 °C et à une pression > 110 bars, lors duquel le mélange réactionnel final se compose, à une température > 80 °C, à une pression > 40 bars et à une teneur en halogénure d'ammonium > 1 % en poids, de deux phases,
la phase A, qui contient au moins 75 % en poids de la quantité totale d'halogénure d'ammonium et
la phase B, qui contient au moins 80 % en poids de la quantité totale d'organosilazane,
lesquelles phases sont séparées.

2. Procédé selon la revendication 1, **caractérisé en ce que** la pression lors de la séparation du mélange réactionnel final est d'au moins 80 et d'au plus 400 bars.

3. Procédé selon la revendication 1 ou 2, **caractérisé en ce que** la séparation du mélange réactionnel final a lieu au-dessus du point critique de l'ammoniac (132,4 °C, 112,8 bars).

4. Procédé selon la revendication 1, 2 ou 3,
**caractérisé en ce que** la phase B est détendue à une pression d'au moins 15 bars pour une température d'au moins 50 °C et **en ce que** les phases qui se forment,
la phase C, qui contient beaucoup d'organosilazane et peu d'halogénure d'ammonium et
la phase D, qui contient la majeure partie de l'ammoniac, sont séparées.

5. Procédé selon l'une quelconque des revendications 1 à 4, **caractérisé en ce que** le rapport molaire de l'ammoniac et de l'organohalogénosilane est d'au moins 7:1.

6. Procédé selon la revendication 1 à 5, lors duquel les courants d'ammoniac et d'organohalogénosilane subissent un chauffage préalable avant l'entrée dans le réacteur sous pression.
